# EUROPEAN PATENT APPLICATION

(11) **EP 2 129 043 A1**
(43) Date of publication of application: **02.12.2009**
(21) Application number: 09156047.4
(22) Date of filing: 24.03.2009
(51) Int. Cl.: H04L 12/26, H04L 12/58

(54) **Relay apparatus, relay method, and monitoring apparatus**

(30) Priority: 29.05.2008 JP 2008141496
(71) Applicant: Fujitsu Ltd., Kawasaki-shi, Kanagawa 211-8588 (JP)
(72) Inventor: Hayashi, Toshiaki, Kawasaki-shi, Kanagawa 211-8588 (JP); Kimura, Yoshihiro, Kawasaki-shi, Kanagawa 211-8588 (JP); Tachibana, Ikuko, Kawasaki-shi, Kanagawa 211-8588 (JP); Tanifuji, Takashi, Kawasaki-shi, Kanagawa 211-8588 (JP); Tanikawa, Yasutaka, Kawasaki-shi, Kanagawa 211-8588 (JP)
(74) Representative: Holtby, Christopher Lawrence

(57) **Abstract**

A relay apparatus receives connection check messages transmitted from a plurality of terminal apparatuses and addressed to a monitoring apparatus when the configuration or the settings of the terminal apparatuses change. The relay apparatus attaches a relay apparatus ID that uniquely identifies the relay apparatus to the header of the connection check message and transmits the connection check message with the relay apparatus ID attached thereto to the monitoring apparatus. When stopping the monitoring of the terminal apparatus under the control of the relay apparatus, the relay apparatus transmits to the monitoring apparatus a monitoring stop instruction message with the relay apparatus ID attached thereto.

## Description

### CROSS-REFERENCE TO RELATED APPLICATIONS

This application is based upon and claims the benefit of priority of the prior Japanese Patent Application No. 2008-14146, filed on May 29, 2008, the entire contents of which are incorporated herein by reference.

### BACKGROUND

1. Field
   The embodiment discussed herein is relates to a relay apparatus, a relay method, and a monitoring apparatus.
2. Description of the Related Art

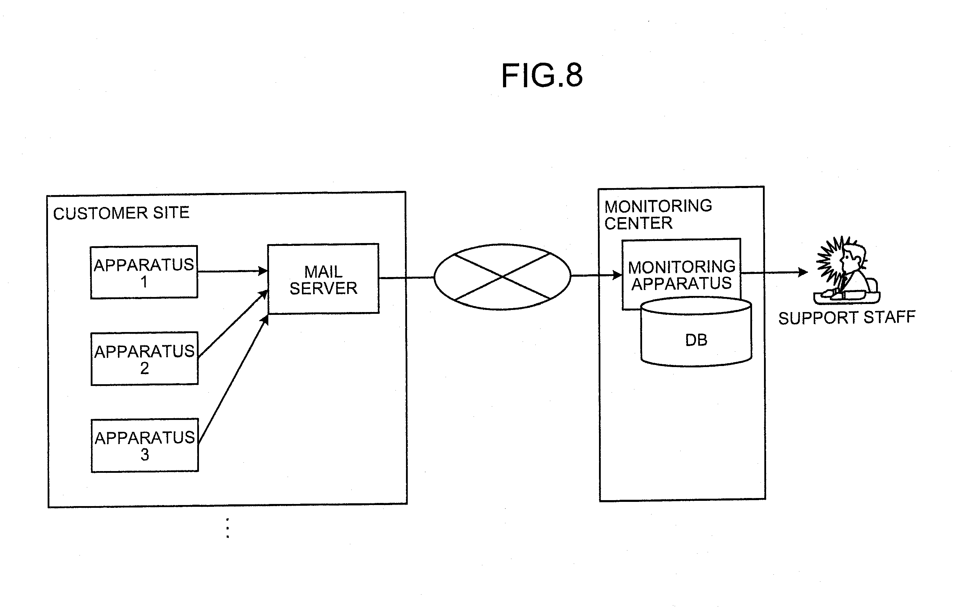

Various technologies of remotely monitoring a site that has information processing apparatuses such as a plurality of servers (or terminal apparatuses such as personal computers (PCs), etc.) have been disclosed (see, e.g., Japanese Laid-open Patent Publication Nos. 2003-198545, 2007-034713, and 2003-076580). Taking a specific example, as illustrated in Fig. 8, a monitoring system that performs remote monitoring includes a monitoring apparatus provided on a monitoring center for monitoring and a plurality of terminal apparatuses (apparatuses 1 to 3) provided on a customer site to be monitored.

In the above system, the monitoring apparatus receives the state (such as hardware failure) and the connection state of the apparatuses 1 to 3 by transmitting and receiving electronic mail to/from the apparatuses 1 to 3 through a network such as the Internet. The monitoring apparatus stores in a database (DB) monitor information such as apparatus information and the operation state for each of the terminal apparatuses using the monitor information contained in the received electronic mail.

To check the connection with each of the apparatuses 1 to 3, the monitoring apparatus determines "regular connection timeout" for an apparatus from which "timeout" is detected because of no arrival of the electronic mail.
A support staff checks the communication path for the apparatus for which the regular connection timeout is determined.

The DB of the monitoring apparatus stores, for example, an apparatus ID of each apparatus on the customer site such as "apparatus 1", customer information such as "customer A", apparatus state of each apparatus such as "normal", and monitoring state of each apparatus such as "monitoring". When monitoring on the "apparatus 1" on the customer site is stopped, the apparatus 1 transmits electronic mail indicating an event of monitoring stop, and the monitoring apparatus updates the DB (the monitoring state of the apparatus 1 "monitoring stopped"). Fig. 8 is a schematic diagram for explaining the overview of the monitoring system.

However, the above technology involves a large number of process steps, and mistakes in the settings tend to occur when various events are executed between an object to be monitored and an object that monitors. More specifically, in the monitoring system, when various events are executed such as monitoring stop and monitoring start of all apparatuses to be monitored, settings are specified for the monitoring stop and the monitoring start for each apparatus. This increases the number of process steps and may cause mistakes in the settings.

### SUMMARY

It is desirable to at least partially solve the problems in the above-described technology.

According to an aspect of an embodiment, a relay apparatus includes: an identifier storage unit that stores an identifier that uniquely identifies the relay apparatus; a message receiving unit that receives a message transmitted from a plurality of information processing apparatuses connected to the relay apparatus to a monitoring apparatus that monitors the information processing apparatuses; a message processing unit that attaches the identifier stored in the identifier storage unit to the message when the message is received by the message receiving unit; and a message transmitting unit that transmits the message with the identifier attached by the message processing unit to the monitoring apparatus.

According to another aspect of an embodiment, a monitoring apparatus includes: a monitoring state storage unit that stores monitoring state of a plurality of information processing apparatuses that are connected to a relay apparatus in association with an identifier that uniquely identifies the relay apparatus; an identifier obtaining unit that, on receipt of a message attached with the identifier that uniquely identifies the relay apparatus from the relay apparatus connected to the information processing apparatuses, obtains the identifier; and a monitoring state processing unit that stores the monitoring state of the information processing apparatuses in the monitoring state storage unit in association with the identifier obtained by the identifier obtaining unit.

According to still another aspect of an embodiment, a relay method includes: storing an identifier that uniquely identifies a relay apparatus; receiving a message transmitted from a plurality of information processing apparatuses connected to the relay apparatus to a monitoring apparatus that monitors the information processing apparatuses; attaching the identifier stored at the storing to the message; and transmitting the message attached with the identifier to the monitoring apparatus.

Additional advantages of the invention (embodiment) will be set forth in part in the description which follows, and in part may be apparent from the description, or may be learned by practice of the invention. The advantages of the invention may be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

Fig. 1 is a schematic diagram of a relay apparatus according to an embodiment;
Fig. 2 is a block diagram of the relay apparatus according to the embodiment;
Fig. 3 is a diagram of an example of a mail header to be transmitted;
Fig. 4 is a diagram of an example of a DB of a monitoring apparatus when a connection check message relaying process ends;
Fig. 5 is a diagram of an example of the DB of the monitoring apparatus when a monitoring stop event ends;
Fig. 6 is a flowchart of a process of relaying the connection check message performed by the relay apparatus according to the embodiment;
Fig. 7 is a sequence diagram of a process performed by the relay apparatus and the monitoring apparatus in the monitoring stop event according to the embodiment; and
Fig. 8 is a schematic diagram of a monitoring system according to a comparative technology.

### DETAILED DESCRIPTION OF THE PREFERRED EMBODIMENT

Exemplary embodiments of the present invention are described in detail below with reference to the accompanying drawings.

Described below is the overview and configuration of a relay apparatus according to an embodiment and the operation thereof.

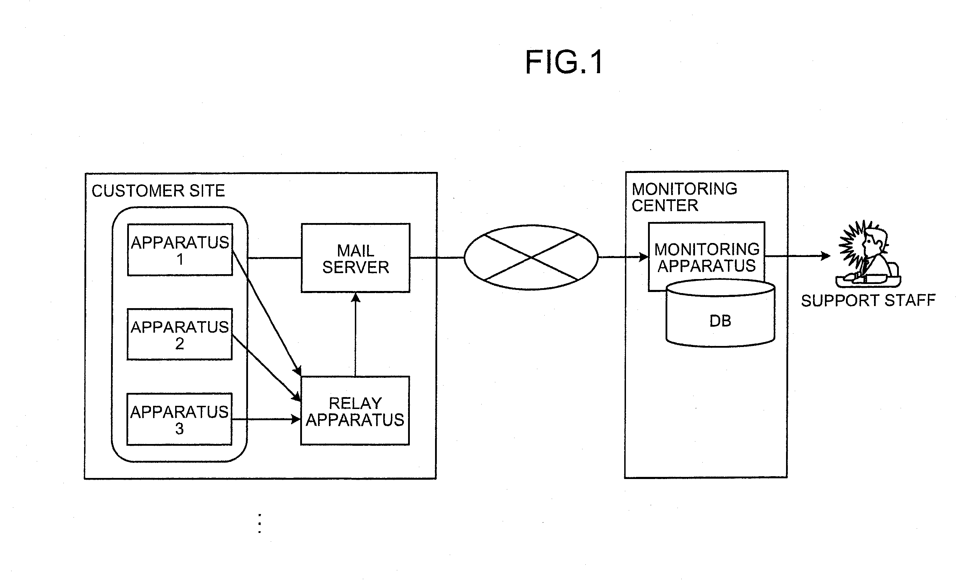

Referring to Fig. 1, the overview of a relay apparatus according to an embodiment will be described. Fig. 1 is a schematic diagram of a relay apparatus according to the embodiment.

The relay apparatus is connected to a plurality of apparatuses to be monitored and a mail server that transmits and receives electronic mail through a network. The apparatuses transmit and receive messages to/from a monitoring apparatus that monitors the apparatuses through a network such as the Internet. The monitoring apparatus includes a DB that stores apparatus information and the operating state of the apparatuses. The monitoring apparatus monitors a customer site that has the apparatuses.

In the above configuration, the relay apparatus is connected to the apparatuses to be monitored, and relays messages from the apparatuses to deliver the messages to the monitoring apparatus. When various events are executed between the objects to be monitored and the object that monitors, the number of process steps can be reduced and mistakes in the settings can be prevented.

As illustrated in Fig. 1, the relay apparatus stores an identifier that uniquely identifies the relay apparatus. The relay apparatus receives messages, which are transmitted from a plurality of terminal apparatuses connected to the relay apparatus to the monitoring apparatus that monitors the terminal apparatuses.

More specifically, the relay apparatus stores, in its predetermined storage unit, a relay apparatus ID that uniquely identifies the relay apparatus and is assigned in advance. The relay apparatus receives electronic mail, such as connection check mail, which are transmitted from a plurality of terminal apparatuses "apparatus 1", "apparatus 2", and "apparatus 3" connected to the relay apparatus to the monitoring apparatus that monitors the terminal apparatuses. The connection check mail received from the apparatuses 1 to 3 connected to the relay apparatus are electronic mail transmitted when settings relative to the connection, the configuration, etc., are changed on the customer site.

When the relay apparatus receives a message, the relay apparatus attaches to the message an identifier that is stored in the predetermined storage unit. The relay apparatus transmits the message with the identifier attached thereto to the monitoring apparatus.

Specifically describing taking the above example, when the relay apparatus receives the connection check mail transmitted from the apparatuses 1 to 3, the relay apparatus attaches a relay apparatus ID stored in the predetermined storage unit to the header of each of the electronic mail. The relay apparatus transmits the electronic mail each having the relay apparatus ID attached thereto to the monitoring apparatus. The monitoring apparatus that receives the electronic mail each having the relay apparatus ID attached thereto stores in the DB the apparatus information, the operating state, etc., of each apparatus in association with the attached relay apparatus ID.

As described above, when the relay apparatus receives event messages transmitted from the apparatuses connected thereto, the relay apparatus attaches the identifier that uniquely identifies the relay apparatus to each of the event messages and transmits the event messages to the monitoring apparatus. As a result, when various events are executed between the object to be monitored and the object that monitors, the number of process steps can be reduced and mistakes in settings can be prevented.

That is, the relay apparatus attaches information to manage the apparatuses under the control thereof to be associated with the relay apparatus. As a result, the relay apparatus can manage collectively the apparatuses under the control thereof. Therefore, compared to the conventional technology that involves various events to be executed for each apparatus, the number of process steps can be reduced and mistakes in settings can be prevented.

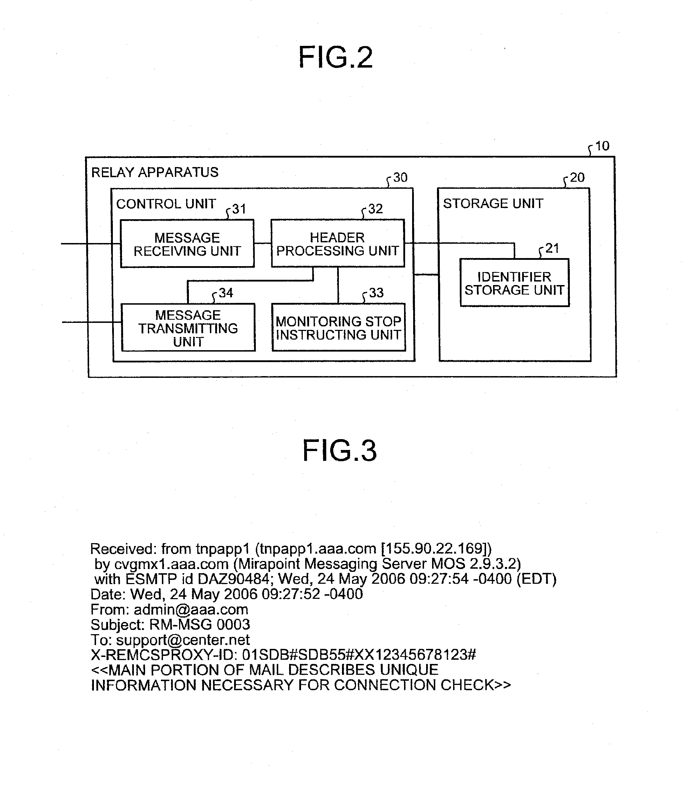

Referring to Fig. 2, the configuration of a relay apparatus 10 according to the embodiment will be described. Fig. 2 is a block diagram of the relay apparatus 10.

As illustrated in Fig. 2, the relay apparatus 10 includes a storage unit 20 and a control unit 30. When the configuration, the settings, etc., are changed in the terminal apparatuses connected to the relay apparatus 10, the relay apparatus 10 relays messages transmitted from the terminal apparatuses connected thereto to the monitoring apparatus.

The storage unit 20 stores data necessary for various processes performed by the control unit 30 and the results of the various processes. The storage unit 20 includes an identifier storage unit 21.

The identifier storage unit 21 stores an identifier that uniquely identifies the relay apparatus 10. For example, the identifier storage unit 21 stores the relay apparatus ID that uniquely identifies the relay apparatus 10 and is assigned in advance.

The control unit 30 includes an internal memory to store a control program, a program that defines procedures of the various processes, and necessary data. The control unit 30 includes a message receiving unit 31, a header processing unit 32, a monitoring stop instructing unit 33, and a message transmitting unit 34 for performing the various processes.

The message receiving unit 31 receives messages transmitted from the terminal apparatuses connected to the relay apparatus 10 to the monitoring apparatus that monitors the terminal apparatuses. More specifically, for example, the message receiving unit 31 receives electronic mail for connection check, etc. transmitted from the terminal apparatuses connected to the relay apparatus 10 to the monitoring apparatus that monitors the terminal apparatuses. The connection check mail received from the terminal apparatus connected to the relay apparatus 10 is electronic mail transmitted when settings relative to the connection, the configuration, etc., are changed in the terminal apparatuses connected thereto. On the other hand, other ordinary mail is transmitted to the monitoring apparatus without passing through the relay apparatus 10.

The header processing unit 32 attaches to a message an identifier stored in the identifier storage unit 21 when the message receiving unit 31 receives the message. More specifically, in the above example, the header processing unit 32 attaches the relay apparatus ID stored in the identifier storage unit 21 to the header of connection check mail when the message receiving unit 31 receives the electronic mail (see Fig. 3). Fig. 3 is a diagram of an example of the mail header transmitted.

When the monitoring stop instructing unit 33 instructs to stop the monitoring, the header processing unit 32 creates a monitoring stop instruction message and attaches the identifier stored in the identifier storage unit 21 to the monitoring stop instruction message. More specifically, in the above example, when the monitoring stop instructing unit 33 instructs to stop the monitoring, the header processing unit 32 creates monitoring stop instruction electronic mail and attaches the relay apparatus ID stored in the identifier storage unit 21 to the header of the electronic mail.

When stopping the monitoring of the terminal apparatuses connected to the relay apparatus, the monitoring stop instructing unit 33 instructs the monitoring apparatus to stop the monitoring. More specifically, in the above example, when a monitoring stop button on the relay apparatus 10 is pressed down to stop the monitoring of the terminal apparatuses connected to the relay apparatus 10, the monitoring stop instructing unit 33 notifies the header processing unit 32 of the instruction to stop the monitoring.

The message transmitting unit 34 transmits to the monitoring apparatus the message with the identifier attached by the header processing unit 32. More specifically, in the above example, the message transmitting unit 34 transmits to the monitoring apparatus the electronic mail with the relay apparatus ID attached to its header by the header processing unit 32.

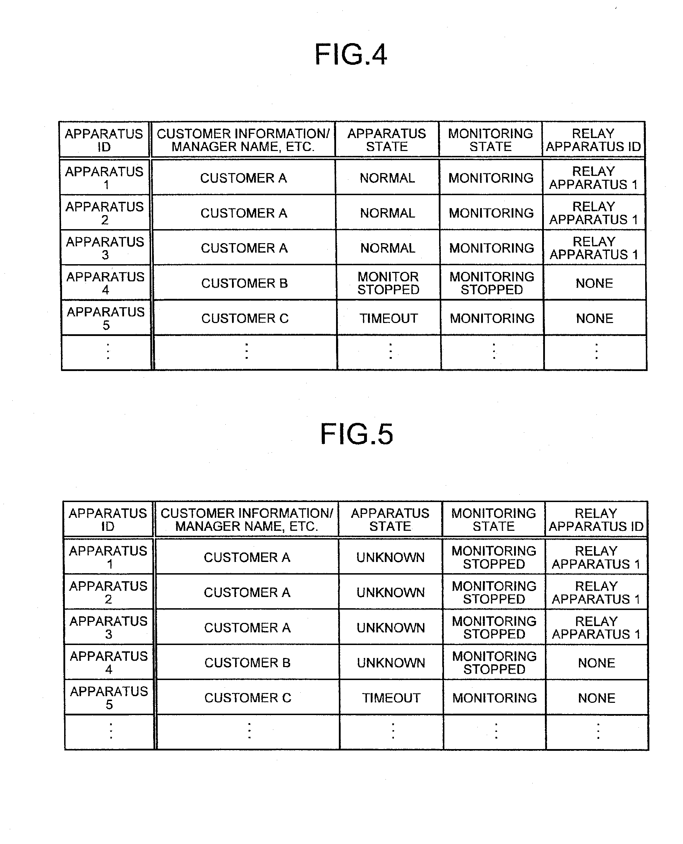

As illustrated in Fig. 4, the monitoring apparatus that receives the connection check mail with the relay apparatus ID attached to its header stores in the DB the apparatus information, the operating state, etc., of each of the apparatuses in association with the attached relay apparatus ID. As illustrated in Fig. 5, the monitoring apparatus that receives the monitoring stop instruction electronic mail updates the apparatus state "normal" and the monitoring state "monitoring" stored in association with the attached relay apparatus ID respectively to "unknown" and "monitoring stopped". Fig. 4 is a diagram of an example of the DB of the monitoring apparatus when the connection check message relaying process ends. Fig. 5 is a diagram of an example of the DB of the monitoring apparatus when the monitoring stop event ends.

When monitoring of each of the terminal apparatuses under the control of the relay apparatus 10 is individually stopped, the terminal apparatus transmits electronic mail indicating a monitoring stop event without passing through the relay apparatus 10. Otherwise, after the above monitoring stop event by the monitoring stop instructing unit 33 is completed, electronic mail indicating a monitoring start event is transmitted without passing through the relay apparatus 10. That is, the relay apparatus 10 is used when a terminal apparatus is newly added under the control of the relay apparatus 10, when the environment thereof is changed, etc., and is not used for an ordinary event. As a result, such an event can be avoided that any error of the terminal apparatuses is not notified due to an error of the relay apparatus 10, and monitoring can be performed without any extra costs.

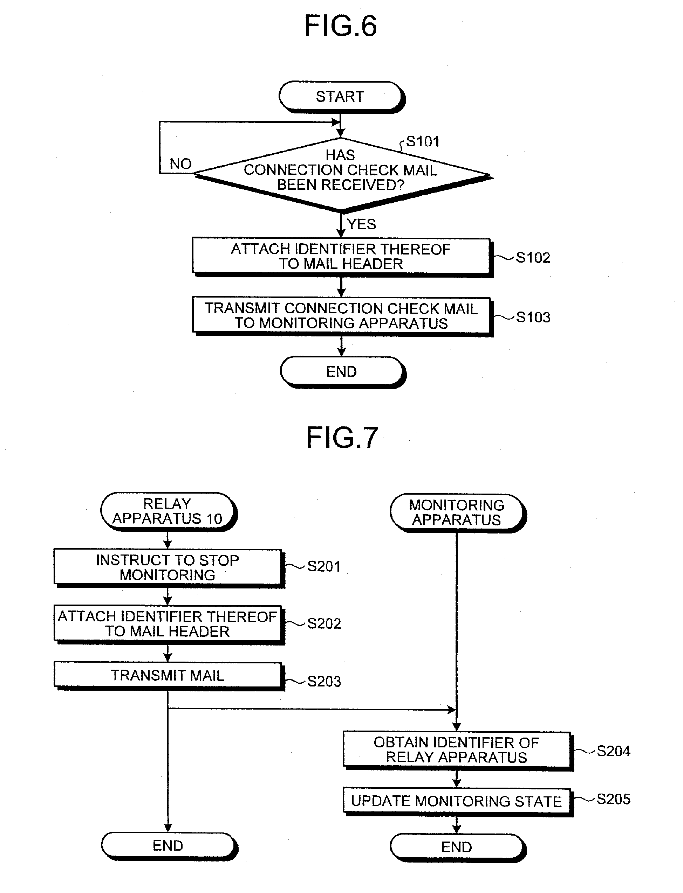

Referring to Fig. 6, a description will be given of a connection check message relaying process performed by the relay apparatus 10 according to the embodiment. Fig. 6 is a flowchart of the connection check message relaying process.

As illustrated in Fig. 6, when the relay apparatus 10 receives connection check mail from a terminal apparatus connected thereto (Yes at Step S101), the relay apparatus 10 attaches the relay apparatus ID stored in the identifier storage unit 21 to the header of the connection check mail (Step S102). The relay apparatus 10 transmits the connection check mail with the relay apparatus ID attached thereto to the monitoring apparatus (Step S103).

Referring to Fig. 7, a description will be given of the operation of the relay apparatus 10 and the monitoring apparatus in a monitoring stop event according to the embodiment. Fig. 7 is a sequence diagram of the operation of the relay apparatus 10 and the monitoring apparatus in the monitoring stop event according to the embodiment.

As illustrated in Fig. 7, the relay apparatus 10 instructs to stop the monitoring in response to an operation, for example, user's pressing a button on the relay apparatus 10 for stopping the monitoring (Step S201). The relay apparatus 10 attaches the relay apparatus ID stored in the identifier storage unit 21 to the header of the monitoring stop instruction mail (Step S202). The relay apparatus 10 transmits to the monitoring apparatus the monitoring stop instruction mail with the relay apparatus ID attached thereto (Step S203).

Thereafter, the monitoring apparatus that receives the monitoring stop instruction mail from the relay apparatus 10 obtains the relay apparatus ID attached to the header of the monitoring stop instruction mail (Step S204). The monitoring apparatus updates the monitoring state of the terminal apparatus associated with the relay apparatus ID stored in the DB based on the relay apparatus ID (Step S205).

When the monitoring is started, similarly to the above monitoring stop event, monitoring start instruction mail with the relay apparatus ID attached thereto is transmitted to the monitoring apparatus.

As described above, according to the embodiment, the relay apparatus 10 transmits to the monitoring apparatus the relay apparatus ID to associate the relay apparatus 10 with the terminal apparatuses under the control of the relay apparatus 10. The monitoring apparatus collectively stops monitoring the terminal apparatuses. Therefore, the number of process steps can be reduced and mistakes in the settings can be prevented when various events are executed between the object to be monitored and the object that monitors.

For example, the relay apparatus 10 receives connection check mail transmitted to the monitoring apparatus when the configuration of the terminal apparatuses connected to the relay apparatus 10 is changed, when the settings of those apparatuses are changed, etc. When receiving the connection check mail, the relay apparatus 10 attaches the relay apparatus ID that uniquely identifies it to the header of the connection check mail. The relay apparatus 10 transmits the connection check mail with the relay apparatus ID attached thereto to the monitoring apparatus. The monitoring apparatus that receives the connection check mail with the relay apparatus ID attached thereto stores in the DB the apparatus state, the monitoring state, etc., in association with the relay apparatus ID for each terminal apparatus. Thereafter, when the monitoring of the terminal apparatuses under the control of the relay apparatus 10 is stopped, the relay apparatus 10 transmits to the monitoring apparatus monitoring stop instruction mail with the relay apparatus ID attached thereto. As a result, when various events are executed between the object to be monitored and the object that monitors, the instructions of the various events are executed collectively to the terminal apparatuses under the control of the relay apparatus. Thereby, the number of process steps can be reduced and mistakes in the settings can be prevented.

While an embodiment of the present invention has been described and illustrated, the present invention is not limited to the embodiment but is capable of numerous rearrangements, modifications and substitutions of parts and elements.

For example, in the above embodiment, the relay apparatus ID attached in advance is used as the identifier to be attached to the connection check mail, the monitoring stop instruction mail, etc. Alternatively, an MAC (Media Access Control) address that is a unique number to the relay apparatus 10 may also be used. For example, when the relay apparatus 10 transmits the connection check mail or the monitoring stop instruction mail to the monitoring apparatus, the relay apparatus 10 attaches the MAC address of the relay apparatus 10 to the mail header. The monitoring apparatus that receives the mail with the MAC address attached thereto from the relay apparatus 10 updates the DB that stores the monitoring state of the apparatuses to be monitored based on the MAC address.

In the above embodiment, the monitoring of all the terminal apparatuses is collectively stopped when the monitoring of the terminal apparatuses under the control of the relay apparatus 10 is stopped. Alternatively, the terminal apparatus whose monitoring is to be stopped may be selected. For example, the relay apparatus 10 retains a table in which the terminal apparatuses are assigned to groups (sections, etc.). The relay apparatus 10 selects the terminal apparatus whose monitoring is to be stopped and transmits monitoring stop instruction mail to the monitoring apparatus.

The processing procedures, the control procedures, specific names, and information including various data and parameters (e.g., the identifier stored in the identifier storage unit 21 illustrated in Fig. 2) described above and illustrated in the drawings may be any information that uniquely identifies the relay apparatus 10 and thus may be changed as required unless otherwise specified.

The constituent elements of each device described above are functionally conceptual, and need not be physically configured as illustrated. In other words, the specific mode of dispersion and integration of the constituent elements is not limited to the ones illustrated in the drawings, and the constituent elements, as a whole or in part, can be divided or integrated either functionally or physically based on various types of loads or use conditions. For example, the message receiving unit 31 and the message transmitting unit 34 are integrated into a "message transmitting and receiving unit" that transmits and receives electronic mail. All or any part of the processing functions performed by the device or the units may be realized by a central processing unit (CPU) and a program analyzed and executed by the CPU, or may be realized as hardware by wired logic.

As set forth hereinabove, according to an embodiment, when various events are executed between an object to be monitored and an object that monitors, it is possible to reduce the number of process steps and to prevent mistakes in the settings.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

## Claims

1. A relay apparatus comprising:
an identifier storage unit that stores an identifier that uniquely identifies the relay apparatus;
a message receiving unit that receives a message transmitted from a plurality of information processing apparatuses connected to the relay apparatus to a monitoring apparatus that monitors the information processing apparatuses;
a message processing unit that attaches the identifier stored in the identifier storage unit to the message when the message is received by the message receiving unit; and
a message transmitting unit that transmits the message with the identifier attached by the message processing unit to the monitoring apparatus.

2. The relay apparatus according to claim 1, further comprising:
a monitoring stop instructing unit that instructs the monitoring apparatus to stop monitoring for stopping monitoring of the information processing apparatuses connected to the relay apparatus; and
a message creating unit that creates, when the monitoring stop instructing unit instructs to stop the monitoring, a monitoring stop instruction message and attaches the identifier stored in the identifier storage unit to the monitoring stop instruction message, wherein
the message transmitting unit transmits the message with the identifier attached by the message creating unit to the monitoring apparatus.

3. The relay apparatus according to claim 1 or 2, wherein the message processing unit attaches the identifier stored in the identifier storage unit to header of the message.

4. The relay apparatus according to any preceding claim,
wherein the identifier is preset and unique to the relay apparatus.

5. The relay apparatus according to any preceding claim,
wherein the identifier is a media access control address.

6. A monitoring apparatus comprising:
a monitoring state storage unit that stores monitoring state of a plurality of information processing apparatuses that are connected to a relay apparatus in association with an identifier that uniquely identifies the relay apparatus;
an identifier obtaining unit that, on receipt of a message attached with the identifier that uniquely identifies the relay apparatus from the relay apparatus connected to the information processing apparatuses, obtains the identifier; and
a monitoring state processing unit that stores the monitoring state of the information processing apparatuses in the monitoring state storage unit in association with the identifier obtained by the identifier obtaining unit.

7. A relay method comprising:
storing an identifier that uniquely identifies a relay apparatus;
receiving a message transmitted from a plurality of information processing apparatuses connected to the relay apparatus to a monitoring apparatus that monitors the information processing apparatuses;
attaching the identifier stored at the storing to the message; and
transmitting the message attached with the identifier to the monitoring apparatus.
